Europäisches Patentamt

European Patent Office

Office européen des brevets

(19)

(11) Publication number: **0 265 382**
**A1**

# (12) EUROPEAN PATENT APPLICATION

(21) Application number: 87810588.1

(22) Date of filing: 14.10.87

(51) Int. Cl.⁴: **B 63 B 1/36**

(30) Priority: 16.10.86 AR 305603

(43) Date of publication of application:
27.04.88 Bulletin 88/17

(84) Designated Contracting States:
AT BE CH DE ES FR GB GR IT LI LU NL SE

(71) Applicant: **Arcusin, Carlos Eduardo**
**Nunez 4136**
**Buenos Aires (AR)**

(72) Inventor: **Arcusin, Carlos Eduardo**
**Nunez 4136**
**Buenos Aires (AR)**

(74) Representative: **Reverdin, André Pierre**
**c/o Katzarov S.A. 19, Rue des Epinettes**
**CH-1227 Genève (CH)**

(54) Floating wheel to allow the displacement of aquatic and applied vehicles.

(57) The object of the invention is a floating wheel to allow the displacement of aquatic vehicles, as well as aquatic vehicles that uses said wheels. The wheels (b) have a spheric conformation and have multiple blades (6). They are loosely affixed to an axle (4) connected to the hull (1) of the vehicle (a).

The floating wheels facilitate the movement of the aquatic vessel.

FIG. 1

FIG. 2

Bundesdruckerei Berlin

## Description

Floating when to allow the displacement of aquatic and applied vehicles

### I.- DETAIL OF MOTIVES

The present invention refers to a floating wheel to allow the displacement of aquatic vehicles, as well as the aquatic vehicle that uses said wheel; the object of which is to offer a novel way that reduces notably the high friction between the hull and liquid media on which it moves.

In conventional floating vehicles, the use of propeller wheels has been well known from long ago, such as, the ancient wheel boats and barges, that about two centuries ago sailed the rivers of North America and and Europe.

Nevertheless, it is a proven fact that the use of propeller wheels in vessels, although comply with the purpose of operating same, this incurs an anormous waste of power; necessary to overcome the great resistance and enormous friction implied by such superficial contact between the underwater parts and the liquid media on which it moves.

Through time, various technics and the employment of different elements have been developed, in order to mainly reduce, in what is possible, this great friction.

Therefore, for example, the study of hydrodynamic laws suggested a redesign in the vessels, modifying the shape of the bow, its inclination, border section, conformation of bilge, etc., so that the vessel may "ply" its way through the water, with the greatest of ease.

We must also add the floatability that in the case of rafts, floats and rafts, mainly depends on floatability of the materials employed, meanwhile that in the case of vessels, it depends on the amount of water displaced by the underwater part of the hull, and that is equivalent to the pressure of the water effected from the bottom upwards.

Subsequent, to these concepts engines of great power, have been employed, in order to obtain a "lifting" of the vessels' bow and of great displacement of the rest of the hull that remains with its underwater part limited -during the displacement- only to the stern area as it ocurrs in "catamaranes" and certain type of speed boats which enable them to obtain great speed, due precisely to this minor friction; also the vessel, being able for certain dimensions, to support itself on legs provided with skids - such as the case of the denominated - "hydrofoils" that also make the super structure much more superficially limited during movement, that at stand still, and, therefore, friction being proportionally lower.

Several studies performed for the development of the present invention, allowed to determine that one of the factors that produced intense friction between the underwater part of the vessel in the liquid media on which the vessel moves; results from the fact that the meeting and contact between the surfaces of the vessels' hull and the liquid media on which it moves, only the particles that form the latter must yield to allow the forced passage of the former, pushed by any whatsoever propelling media (sail, motor, oar, starting pole, etc.), while the hull, being of non-modifiable structure, can only contribute to the movement through its own and particular format, and the floatability conditions. This made the inventor experiment with various means integrated or incorporated to the hull, until he invented the wheel herein described, which is not yet self-propelled but turns in unison with the displacement of the vehicle through the liquid media, by means of the impulse caused by an external force, even if said vehicle is self propelled (that is to say, that it moves on its own by means of the use of a motor, sail, etc.), or if it corresponds to a towed or pushed vehicle.

The vehicle with the new wheels, introduces a substantial modification in the transport through water of persons and/or goods, due to its characteristics causing a significant reduction of resistance when in movement, that is evidenced in a low requirement of propelling power, and therefore in a lower power consumption; a fact that notably influences in the total operative cost, taking into consideration the great incidence that the fuel consumption has, within the global productivity of the transport system.

This reduction offers positive advantages as being able to navigate at the same speed than the present systems, but with a lower energetic cost and great saving in matter of space and weight in relation to the propelling equipment and its auxiliary means; to mantain the required power va lues, obtaining greater displacement speed which enables it to perform a larger amount of voyages in a certain period of time, using the same vessel; to supply in the storage places without need of previously carrying the cargo to deep water ports; to sail in coast line areas, even the ones of low depths; to increase the speed of unloading in certain type of goods, due to the same beino able to take place by gravity, etc.-

In the particular case of cargo transports, it is foreseen that the resulting vessel, being an independent unit, can be coupled lineally to other equivalent ones, therefore making it possible to form a load train that permits its distribution individually or jointly, in relation to each availability or necessity.

For all this it is possible to imagine the acceptance that will have said invention on being put into operation, whichever the category or destination to which it be entrusted, because due to its characteristics, it can be either applied to aquatic vehicles of any kind, such as sports or pleasure boats, conventional cargo vessles, passenger vessels, small boats, boats and auxiliary barges, pushed or propelled by an external force in the vessel itself, in a towed or pushed vessel, whether it be by sail, motor, etc.-

### II.- PRINCIPAL OBJECT

For this purpose, the floating wheel (b), to facilitate the movement of aquatic vehicles (a), is characterized for having a circular body movement (5) loosely affixed to an axle (4) connected to the hull (1) of the vehicle (a).-

III.- ILLUSTRATION.

For a better clarification and understanding of the object of the invention it has been illustrated with several figures in which said invention has been represented in some of the preferred embodiment forms, all of which all of which as a simple non restrictive but enunciative example:

Fig. 1: is a plan view of a cargo vessel or barge, provided of the floating wheels destinated to facilitate its displacement in water, showing one of the possible distribution forms of these wheels, between the structure of the vessel forming the holds for admission of the cargo.

Fig. 2: is a lateral view, according to the length of the barge in fig. I, giving a clear idea of the spheric conformation of the wheels, and of the projection of its blades on the rolling periphery, it being observed the manner in which the above mentioned spheric wheels support the structure by self floatation, therefore making the whole of the structure of the barge behave like a dead weight which, in addition to offering greater safety to the load, it fundamentally helps the movement because it offers therefore a minor resistance when moving.

Fig. 3: is a face view, according to its beam of the same barge supported by the floating spheric wheels.

Fig. 4: another face view, according to the beam of the barge, in a new embodiment form of revolution body movement that form the wheels, that in this case are cylindrical.

Fig. 5: is a side schematic view of the area corresponding to bow in the case of a vessel in which the hydrodynamic action bulb has been replaced by a wheel according to the present invention.

Fig. 6: the same schematic detail as fig. 5, shown in a plan view, allowing to observe the presence of a cylindric shaped wheel applied to the vessels bow, and which responds to a cylindric format.

Fig. 7: is a side view of the aquatic vehicle, in a new embodiment form which corresponds to a tricycle aquatic vehicle (intergrated, of course by the new floating wheel principal object of the invention), which is sailed propelled.

Fig. 8: is a plan view of the aquatic vehicle, according to the embodiment of fig. 7.-

Fig. 9: is a side view of the aquatic vehicle, in another embodiment form, which corresponds to a tricycle aquatic vehicle, propelled by a pedal motor that ends in a propeller shaft.

Fig. 10: is a plan view of the aquatic vehicle according to the embodiment of figure 9.

Fig. 11: is a side view of the aquatic vehicle, in another embodiment form, which corresponds to a tricycle aquatic vehicle, but propelled by the combination of the means of the examples of figures 7-8 and 9-10, that is to say, by a sail and by a pedal operated propeller.

Fig. 12: is a plan view of the aquatic vehicle, according to the embodiment of figure 11.

Fig. 13-2 and 13-b is a view of both embodiment examples of revolution bodies formed by the floating wheels, the first one being spheric and the second one spheric flattened with plans.

Fig. 13-b, is another form of embodiment of the revolution body of the wheel corresponding to two cone trunks joined by the equatorial area of bigger section and ended in convexities.

Fig. 13-c, a new form of embodiment of the revolution body of cylindric format with convex bases.

Fig. 13-d, is a view of the revolution body in a new form of embodiment according which it has an ovoid shape with deep surrounding edge.

Fig. 14 is a side schematic view of a racing barge or sport boat in which the revolution bodies constituting the wheels form a continuous train peripherically connected by a worm band.

Fig. 15, a side view of a sail barge provided with the wheels train connected by the worm band in a caterpillar form.

Fig. 16 es a plan view of the embodiment example of figure 15, with a partial section showing the presence of the worm turn band.

Fig. 16-2 is a perspective detail of the wheels set connected by the worm band.

Fig. 17 is a perspective view of the barge of figures 15 and 16.

Fig. 18 is a side view detail of the barge's bow in which are shown mounted one of the floating wheels constituting the object of the invention; and finally,

Fig. 19 is a plan view of a barge, in which the arrangement of the floating wheels of diverse format is shown.

In the different figures, the same reference numbers indicate the same or corresponding parts the group of various elements being indicated with letters.

These references correspond to the following detail, being:

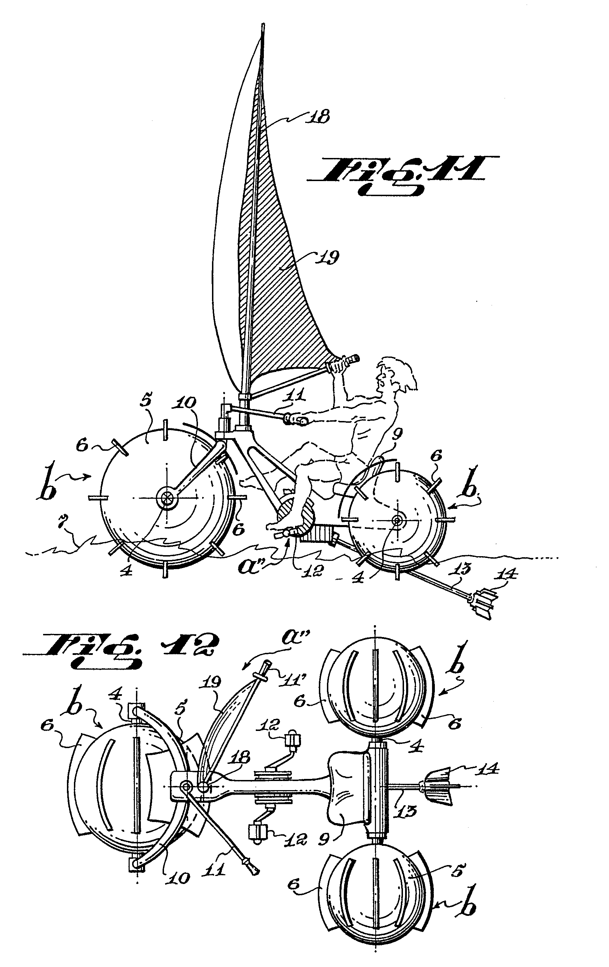

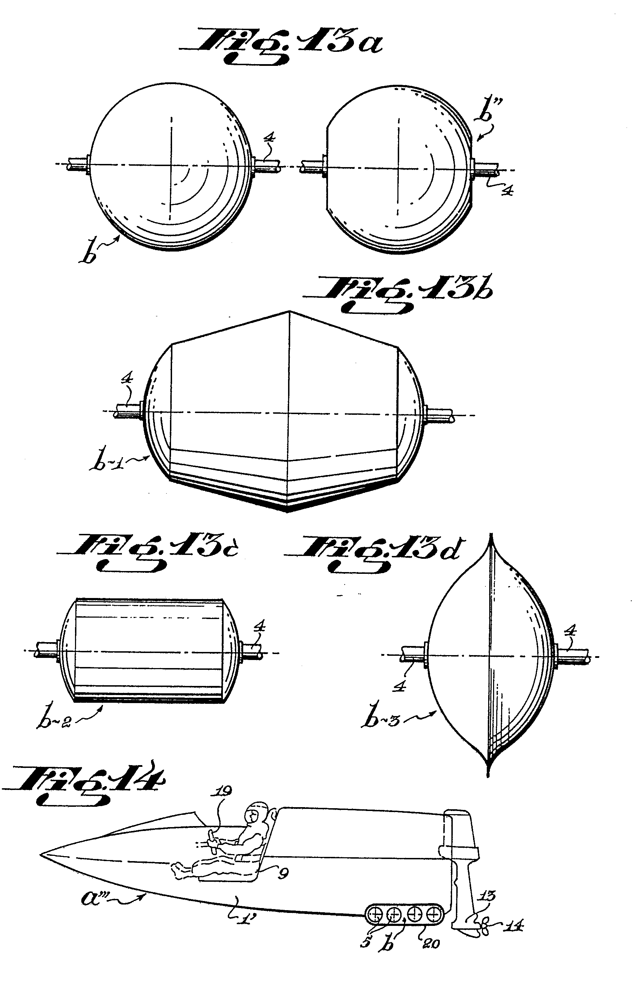

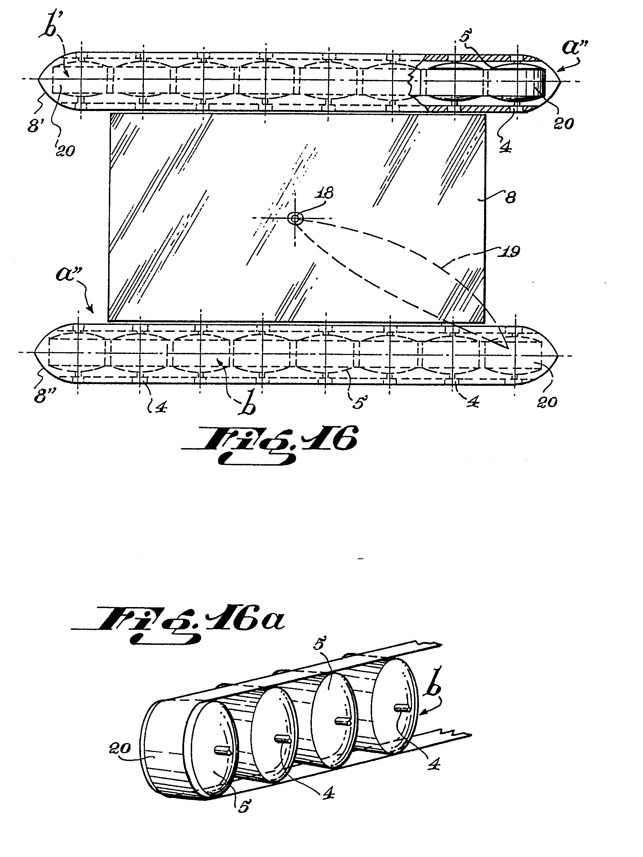

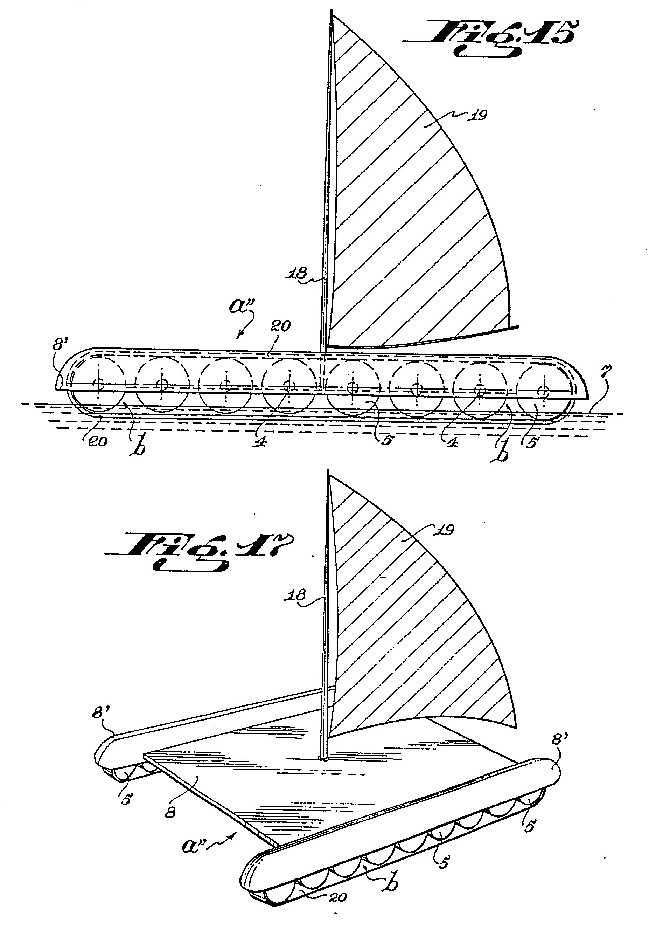

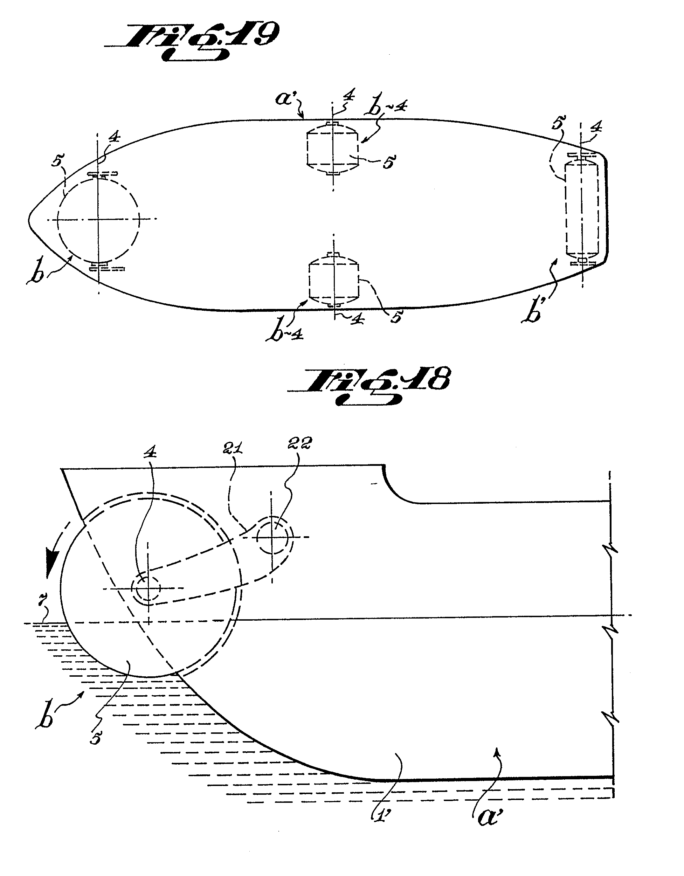

a - aquatic application vehicle (cargo barge) a' -aquatic application vehicle (cargo or passenger vessel) a" - aquatic tricycle application vehicle, sail propelled (figures 7 and 8), by pedal-propeller (figures 9 and 10) or by pedal-propeller and sail (figures 11 and I2)

a'''- boat

b - floating wheel (spherical)

b'- floating wheel (cylinder shape)

b"- floating wheel according to shape of figure 13-a flattened

b-1 floating wheel according to shape of figure 13-b

b-2 - floating wheel according to shape of figure 13-c

b-3 - floating wheel according to shape of figure 13-d

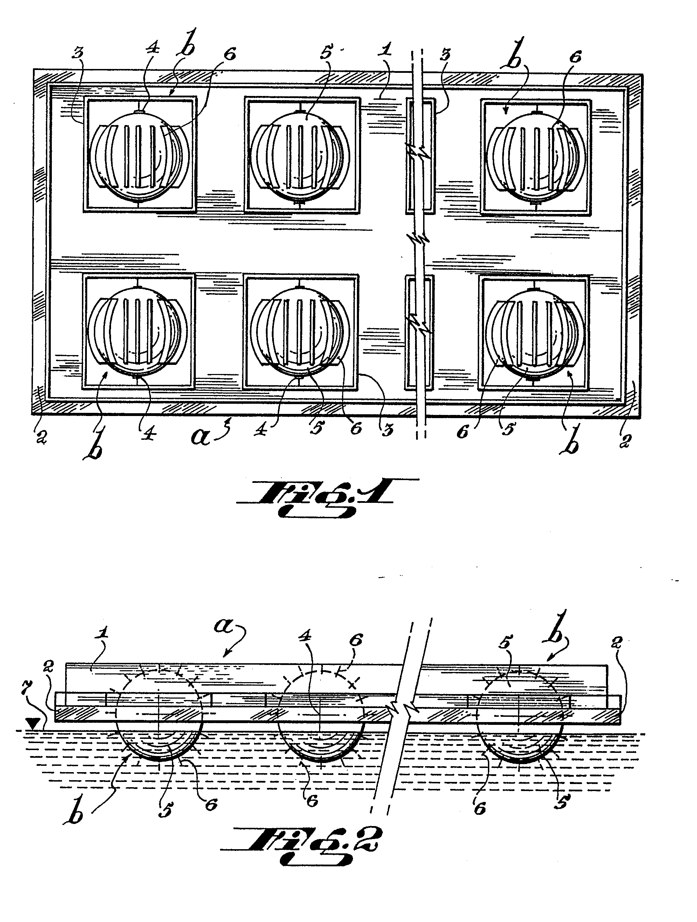

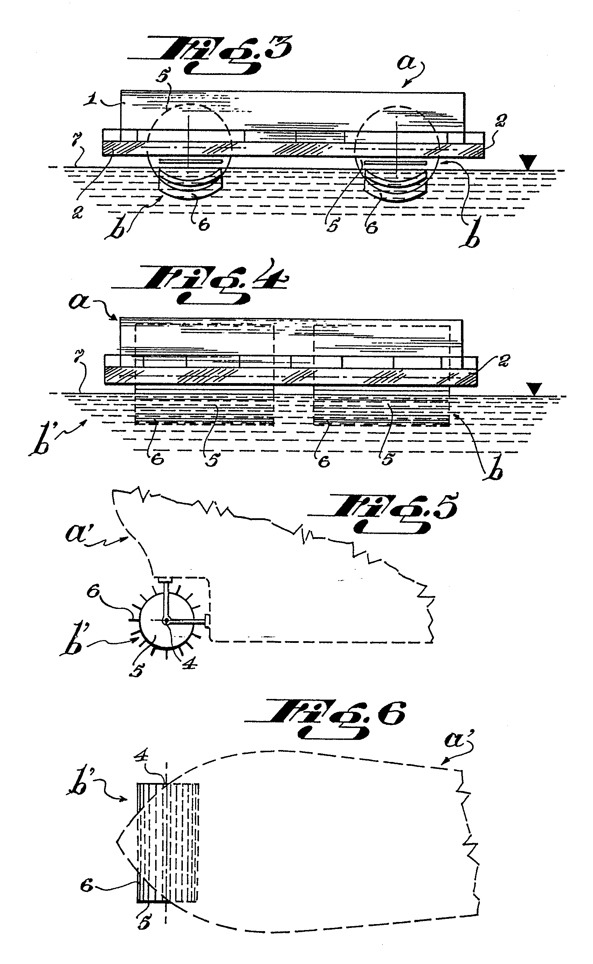

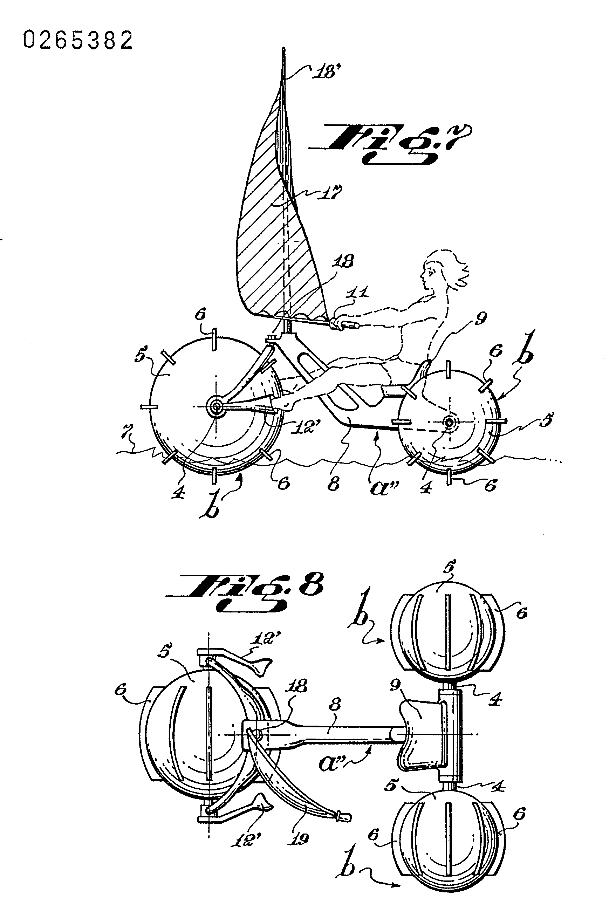

1 - hull or holds of the vehicle (figures 1 to 4)

1'- variation of hull

2 - vehicle's gangplank (figures 1 to 4)

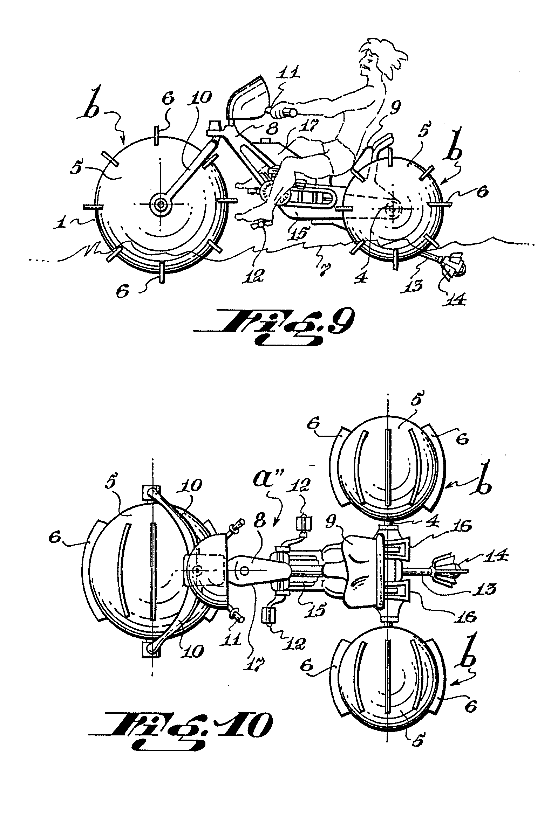

3 - openings of 1, for the mounting of b or b' (figures 1 and 4)

4 - loosely mounting axle of 5

5 - revolution body movement conforming to wheels b or b'

6 - transversal blades or skids of periphery 5

7 - level of the liquid or water means by which it moves a, a' or a''

8 - frame of the vehicle of the examples of figure 7 to 12

8'- protector

9 - seat

10 - fork

11 - steering handle bar

12 - pedals

13 - propeller shaft

14 - screw propeller

15 - gear case

16 - supports

17 - deposit

18 - mast or pole

19 - sail

20 - worm band

21 - arm

22 - axis

## IV - DESCRIPTION

In general terms, the aquatic application vehicle of the new b or b' wheel can be a cargo barge-such as barge a for example, of figures I to 4- or a cargo and/or passenger vessel -such as vessel a' of figures 5 and 6 -or individual sports or pleasure, such as any whatsoever of the a'' represented in any of the variations of figures 7 to 12 indistinctly.

These vehicles a, a' or a'' can be self propelled "per-se", by means of a motor, sail 19, turbine or the like similar; or by means of an external propelling force like the one of an aquatic tractor vehicle, such as a tugboat, pusher-tugboat, etc., and they provide one or more wheels mounted in their structure or hull I, wheels these that are the ones that constitute the essential part of the invention.

With more detail and considering the embodiment examples of figures I to 4, the aquatic application vehicle, is a cargo barge a, formed on a flatened rectangular prismatic structure 1 of metal, plastic, wood or appropriately similar, that forms a bed, a deck facing the former, and delimited by lateral walls and crossbeams which interiorly define cavities or receptacles in the manner of holds 1 for cargo, and that can include resistent, divisional and collission bulkheads, like manhole covers, loading and unloading hatches, provided with their coamings and washboards, etc.- All these not ha ving been illustrated, for not being important for the object of the present invention but only in an accesory manner, and destinated, as it is known, for circulation of the crew and auxiliary unloading and loading personnel, to loading maneouver, water tight closing of holds, etc.-

The above referred structure of hold 1, has aligned in intermediate areas openings or passages 3 crossed by axles 4 that are transversally directed in relation to the vehicles displacement direction; being these virtual axles able to form a right angle (when they are in full or frontal transversal arrangement) or acute angle.

In these axles 4, are mounted wheels b with a free or loose rotation capacity relative to structure 1, and that correspond to revolving bodies 5 which can conform a sphere (case detailed in figures 1 to 3), or a cylinder (example of figure 5), in this latter case, with its side walls orientated as shown in figure 4.

On the periphery of these wheels b, bodies 5 have projected multiple equidistant blades 6, that can be conformed in a "spoon" shape, in such a way that they facilitate the pushing effect during movement and rotation for their subsequent penetration once more in the liquid media. Also these blades 6, in the case of cylindric conformation of figure 5, can have a simple obliquous or forked arrangement on periphery 5, or following a helicoidal formation, with the purpose of cooperating with movement and rotation of b.

The diameter of rotatory bodies 5, the position of axles 4 in 1, and the height of this structure 1, are such that, wheels b project under a at a certain extent.

Wheels b are structured with special materials and are preferably hollow with a water tight cavity, which assures a perfect floatability of same; in such a way that in a land vehicle, they constitute the support of structure 1, which stays as a dead body at a certain height above the level or surfase 7 of water or liquid media, in which it moves without loosing stability that due to its low height have a very low center of gravity, while on being separated from the water, said structure 1 offers no resistance to movement (figures 2,3 and 4).

In the case of other vessels, as a of figure 5 and 6, the constitutive principle and mounting of wheels b', is similar to that indicated for the first embodiment example of figures 1 to 4, with the exception that it can dispose of one or more wheels in hull a', for example in replacement of the bow bulb.

The distance that separates the bottom I in relation to the level or surface 7 of the liquid media, when the holds are loaded, must assure that structure 1 does not reach 7, for the previously mentioned objectives.

Moreover, each unit a in their crossbeam areas, can be provided with coupling means to other similar ones, with the purpose of being able to join a certain number of barges a forming a train, that can be either for towing, or for pushing of same by a tractor vehicle or a tugboat.

Of course, the movement of the vessel a or a', is the same, even if the underwater part is in contact with the water 7 or not. Considering, that by definition, the displacement is the total weight of the aquatic vehicle, that normally is of the same as the volume of water displaced by the underwater part of the vessel (Archimides Principle), multiplied by the density of water, that varies according to if it is sweet water (conventional density 1:1) or salty water (conventional density 1:1.025), being W: displacement; V: volume of water displaced by the underwater; d: density of water; therefore W-V.d

In the present case, the displacement of vehicles a or a' as the case may be, self propelled, or towed by an external force, the wheels b or b' as the case may be, shall freely rotate on its axles 4 (that in order to facilitate this rotation are preferably mounted on bearings), cooperating to the movement of the vessel, with a minimum of friction and resistance, because hull 1 is not in contact with water, and even if so (case of example of figures 5 and 6), the wheels b and b' favour this movement.

In the embodiment examples shown in figures 7 to 12, the application aquatic vehicle can be a tricycle vehicle, for individual pleasure or sports practice, formed by frame 8 that by means of a rear axle on bearings 4, has mounted the spheric wheels 5 already described, with their corresponding spheric blades 6, while that on the front part it has a crank 11 that commands a direction axle, which by means of a fork 11 mounts the front wheel 6.

Frame 8 has a seat 9 that is provided with the transmission movements, either from a motor 17 that rotatively operates an axle 13 that ends in a propeller 14 (figures 11 to 14) or by means of handle pedals 12 to operate with the feet of axle 13-14 (figures 11 and 12), or by means of a sail 19 supported by a pole or mast 18 and a boom that compliments the crank 11 or with the combination of propeller 14 and sail 19, as in the embodiment of figures 11 and 12.

In the case of the examples of figures 7 and 8, the pedals 12' are simply to place the feet, because they are inmovile.

It is foreseen in another possible form of embodiment that the periphery of the wheels b whatevever be its embodiment form according to figures 1 to 12, figures 13-a-, 13-b, 13-c, 13-d, etc., having or not blades 6, and in case of not having same, said rolling surface may be wrinkled.

It is equally provided the use of a plurality of floating wheels b -whatever be their revolving shape- forming a set the peripheries of which are connected between same by a worm band in a caterpillar form of warlike tank or the like (embodiment examples of figures 14 to 17).

It is undoubtable that when this invention is put into operation, certain modifications can be introduced in what refers to the construction details and in shape of same without departing from the principal objectives that are clearly established in the claims that follow:

**Claims**

1. Floating wheel, to facilitate the movement of aquatic vehicles; characterized by comprising a revolution body loosely mounted on an axle connected to the vehicle hull.

2. Floating wheel, to facilitate the movement of aquatic vehicles; characterized for comprising a revolving body loosely mounted on a axle to the hull of the vehicle the periphery of which has multiple blades transversal to the rotating direction of said wheel.

3. Floating wheel, to facilitate, the movement of aquatic vehicles; as claimed in claim 1, characterized by the fact of the wheel being spherically shaped.

4. Floating wheel, to facilitate the movement of aquatic vehicles, as claimed in claim 1, characterized by the fact that the wheel being cilindrically shaped.

5. Floating wheel, to facilitate the movement of aquatic vehicles; as claimed in claim 1, characterized by the fact that the mounting axle of the wheel being directed in a transversal manner to the movement direction of the vehicle.

6. Floating wheel, to facilitate the movement of aquatic vehicles as claimed in claim 1, characterized by the fact that the mounting axle of the wheel being directed forming an acute angle in relation to the direction movement of the vehicle.

7. Floating wheel, to facilitate the movement of aquatic vehicles; as claimed in claim 1, characterized by the fact that the mounting axle of the wheel being directed forming a right angle in relation to the direction movement of the vehicle.

8. Floating wheel to facilitate the movement of aquatic vehicles, as claimed in claim 1, characterized by the fact that the periphery of the wheel presents a uniforme wrinkled extent.

9. Floating wheel to facilitate the movement of the vehicle, as claimed in claim 1, characterized by comprising a set of said floating wheels the periphery of which being connected by a worm band.

10. Aquatic vehicle, with the use of the wheel as claimed in claim 1, characterized by the fact that the hull of the vehicle being supported above the surface of the liquid media on which it moves.

11. Aquatic vehicle, with the use of the wheel as claimed in claim 1, characterized by forming a cargo barge, comprising a plurality of wheels mounted in loosely rotatory form on axles transversal to the advance movement of the vehicle, which are aligned in at least two rows, that constitute the supporting means on the liquid media on which said wheels float; including the barges hull, means of branch coupling head hooking in train with other barges of identical characteristics.

12. Aquatic vehicle, with the use of the wheel as claimed in claim 1, characterized by comprising at least one loosely rotatory wheel mounted in the recess of the bow.

13. Aquatic vehicle, with the use of wheel as claimed in claim I, characterized by comprising two loosely rotatory mounted wheels flanking a portion of the keel of the underwater part.

14. Aquatic vehicle, with the use of a wheel as claimed in claim 1, characterized by the fact that being a tricycle vehicle comprising three wheels -two rear wheels and one front directional; and including self-propellers means.-

15. Aquatic vehicle, with the use of wheel as claimed in claim 1, and also as claimed in claim 11, characterized by the fact- that the self propelling means are constituted by a sail.

16. Aquatic vehicle, with the use of the wheel as claimed in claim 1, and also according to claim 11, characterized by the fact that the self propelling means are constituted by a propeller axle.

17. Aquatic vehicle, as claimed in claim 13, characterized by the fact that the propeller axle being operated by a motor.

18. Aquatic vehicle, as claimed in claim 13, characterized by the fact that the propeller axle being operated by handle pedals.

19. Aquatic vehicle, as claimed in claims 11 to 13, characterized by the fact that the self propelling means being constituted by the combination of a sail with a propeller axle.

20. FLOATING WHEEL TO FACILITATE THE MOVEMENT OF AQUATIC VEHICLE AND AQUATIC APPLICATION VEHICLE; all in agreement with the foregoing claims, and substantially as described and illustrated in the annexed specification.

0265382

Fig. 1

Fig. 2

0265382

Fig.3

Fig.4

Fig.5

Fig.6

0265382

Fig. 7

Fig. 8

0265382

**Fig.9**

**Fig.10**

0265382

FIG. 11

FIG. 12

0265382

*Fig. 13a*

*Fig. 13b*

*Fig. 13c*

*Fig. 13d*

*Fig. 14*

**Fig.16**

**Fig.16a**

Fig. 15

19

18

a"

20

8'

20    b         4         5      4      b    5

Fig. 17

19

18

8'                                      8'

a"                                      5

5                                       5

8

20    b

0265382

Fig.19

Fig.18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 298 348 (SANDERS)<br>* Column 1, lines 30-34; column 2, lines 46-58; column 4, lines 22-24; figures 1,2 *<br>--- | 1,2,4,5,7,10,11,14-20 | B 63 B    1/36 |
| X | FR-E- 19 281 (SCHWEITZER)<br>* Page 1, line 44 - page 2, line 4; figures 1,2 *<br>--- | 1,4,7,14,17,20 | |
| X<br><br><br>A | FR-A- 473 396 (SCHWEITZER)<br>* Whole document *<br><br>---<br> | 1,2,5,7;10,11,14-16,19,20<br>9 | |
| X | US-A-2 524 938 (SMITH)<br>* Column 2, line 52 - column 3, line 13; figures 1,2 *<br>--- | 1,13 | |
| X | FR-A- 466 440 (SCHWEITZER)<br>* Page 1, lines 17-42; figures 1-6 *<br>--- | 1-5,7 | TECHNICAL FIELDS SEARCHED (Int. Cl.4) |
| X | DE-C- 808 805 (VOSS)<br>* Lines 13-17; figures c,d *<br>--- | 1,12 | B 63 B<br>B 63 H |
| Y | FR-A-1 424 603 (SCHAAD)<br>* Whole document *<br>--- | 1,9 | |
| Y | GB-A- 5 246 (FOX) (A.D. 1911)<br>* Page 4, lines 31-35; figures 1,2,4 *<br>----- | 1,9 | |

The present search report has been drawn up for all claims

| Place of search | Date of completion of the search | Examiner |
|---|---|---|
| THE HAGUE | 03-12-1987 | GRUNFELD M.Y.E. |